# EUROPEAN PATENT APPLICATION

(11) **EP 1 270 291 A1**
(43) Date of publication of application: **02.01.2003**
(21) Application number: 01915757.7
(22) Date of filing: 23.03.2001
(51) Int. Cl.: B60H 1/24

(54) **CABIN VENTILATOR FOR CAR**

(30) Priority: 31.03.2000 JP 2000096773
(71) Applicant: Yamashiro, Tsuneichiro, Kyoto 602-0943 (JP)
(72) Inventor: Yamashiro, Tsuneichiro, Kyoto 602-0943 (JP)
(74) Representative: Pfenning, Meinig & Partner GbR
(86) International application number: JP0102383
(87) International publication number: WO01074614

(57) **Abstract**

A cabin ventilator for car, wherein a flexible vent pipe (1) allowing to communicate between a cabin inside space (4) and a cabin outside space (5) is disposed, a blower (2) is connected to the vent pipe (1) so as to exhaust air from the cabin inside space to the cabin outside space, a solar battery panel part (3) is disposed in the cabin inside space at a position where sunlight is radiated for supplying electric power to the blower, and a shade assembly (16) is installed on at least one of the inside surface of a window glass (15), an inside window frame portion, and a dashboard (6) so that the shade assembly can cover the window glass together with the solar battery panel part from the inside of the cabin during the parking of the car.

## Description

### Technical Field

The present invention relates to a cabin ventilator for car for preventing an interior temperature of a car parked outdoors from becoming high.

### Background Art

When a car is parked outdoors, the windows of the car are closed and the doors of the car are locked for preventing theft. However, sunlight incoming into the closed inside space of the car will cause a remarkable increase in the interior temperature. Especially in summer season, the interior temperature of a car would become as high as to nearly cause burns when a user touches seats or steering wheels after parking outdoors in only a short time, which may leads to a problem that the car could not be started immediately.

To prevent increases in interior temperature of cars, engines and air conditioners of the cars often continue working during the parking of the cars, which, in turn, would lead to problems such as environmental pollution due to exhaust gas or waste of fuel.

In order to resolve such problems, various cabin ventilators for cars have been suggested so far, in which an electromotive ventilation fan is provided at a ventilation opening communicating the interior of the car with the exterior, wherein the fan is driven through solar batteries.

For instance, Japanese Laid-Open Patent Publication No. 40,736 of 1995 discloses a car provided with a solar battery driven ventilation system comprising a ventilation device, which is mounted to a horizontal base portion partitioning a space within a cabin portion and a space within a trunk portion, for exhausting air in the interior of the cabin portion to the interior of the trunk portion; solar batteries, which are assembled into the same substrate body as the ventilation device, to serve as a power source for driving the ventilation device; and a shutter device for controlling supply of power from the solar batteries to the ventilation device upon opening and closing sunlight receiving surfaces of the solar batteries, wherein drive of the shutter device is linked with a emergency-brake.

However, such an arrangement makes it difficult for a user to additionally install the ventilation system in a car afterward. The reason why is that it will be necessary to assemble a switch for controlling drive of the shutter device into the interior of a handbrake lever or to form a through hole into the horizontal base portion for communicating the cabin portion with the trunk portion for mounting the ventilation system.

Moreover, in the above arrangement, while air exhausted into the trunk portion is made to be exhausted to the exterior through an exhaust outlet preliminarily provided in the car, wherein this exhaust outlet being one that is arranged to function as an air outlet for enabling easy closing of the doors also when the window glasses are closed, it will be impossible to exhaust air through this exhaust outlet to the exterior unless a certain degree of exhaust pressure is present. It will accordingly be impossible to effectively perform ventilation of the cabin interior with this ventilation system.

The ventilation system as disclosed in Japanese Laid-Open Patent Publication No. 95,124 of 1997 is provided with an exhaust fan at an ventilation opening for communicating the interior of the car with the exterior. Such a ventilation opening opens to a shelf board rearward of the rear seats in the cabin interior and is connected to a ventilation opening of a car chassis bottom portion through a duct. Solar batteries are provided on, for instance, an outer surface of a ceiling portion of the car or in the interior of the car inside of the rear window. Electric power generated by the solar batteries is stored in a condenser, and upon actuation of a temperature sensor disposed in the cabin interior, electric power is supplied from the condenser to the exhaust fan for ventilation of the cabin interior.

According to this arrangement, however, it will be troublesome to form the ventilation opening into the shelf board and mount the exhaust fan to the ventilation opening. Thus this arrangement is, similar to the above-described prior art, makes it difficult for a user to additionally install the ventilation system in a car afterward. Moreover, since the ventilation opening opens to the shelf board rearward of the rear seats, a drawback is presented in that heat hanging over proximate of the ceiling of the cabin cannot be effectively exhausted.

### Disclosure of the Invention

It is, therefore, an object of the present invention to provide a cabin ventilator for car of solar battery driven type that can be easily installed in a car and that is capable of reliably and effectively discharging heat in the cabin interior to the exterior.

It is another object of the present invention to provide a cabin ventilator for car of solar battery driven type that is capable of discharging heat in the cabin interior to the exterior while simultaneously preventing the temperature of the cabin interior, particularly peripheral portions of the dashboard and the steering wheel, from becoming high upon irradiation of sunlight.

In order to resolve the above objects, the present invention provides a cabin ventilator for car, comprising: a flexible vent pipe for communicating a cabin inside space with a cabin outside space; a blower connected to the vent pipe so as to exhaust air from the cabin inside space to the cabin outside space; a solar battery panel part disposed in the cabin inside space at a position where sunlight is radiated for supplying electric power to the blower; and a shade installed on at least one of the inside surface of a window glass, an inside window frame portion and a dashboard so that the shade can cover the window glass together with the solar battery panel part from the inside of the cabin during the parking of the car.

According to a preferred embodiment of the present invention, the solar battery panel part comprises a solar battery panel body, and means for supporting the solar battery panel body on at least one of the inside surface of the window glass, the inside window frame portion and the dashboard in such a manner that a sunlight receiving surface of the solar battery panel body faces towards the cabin outside space.

According to another preferred embodiment of the present invention, the solar battery panel part comprises a base with an inclined upper surface, a flat plate-like lid mounted to the higher edge of the inclined surface through hinges, and a solar battery panel body mounted on the upper surface, and is disposed on the dashboard or on the rear tray, and the lid is movable between a closed position at which the lid covers the solar battery panel body and an open position at which the lid is rotated by a desired angle from the closed position and held in that position so as to keep the solar battery panel body exposed to sunlight, and an inside surface of the lid is formed to reflect sunlight.

According to still another preferred embodiment of the present invention, the shade comprises a pleated shade assembly having a pair of side edges, a top edge, a bottom edge and an intermediate portion, the assembly including: two pairs of upper and lower L-shaped fixing members for attaching the upper and bottom edges of each side edge to each side end portion of the window glass; a rail wire extending along the top edge of the window glass, both ends of the rail wire being fixed to the corresponding upper L-shaped fixing members; a pair of pleated shade members, each of the shade members including a stable side edge secured to the pair of upper and lower L-shaped fixing members and a movable side edge, each of the shade members being slidably supported on the rail wire in such a manner that the pleated shade member is movable between a working position where the pleated shade member is expanded up to a central portion of the window glass and an accumulated position where the pleated shade member is folded towards the side end portion of the window glass; pull tabs supported at respective movable side edges of the shade members; an intermediate fixing portion mounted to a central portion of the top edge of the window glass and connected to the rail wire for supporting the rail wire; first fastening members supported at the respective pull tabs of the shade members so as to engage with each other for fixing the shade members at the working position; and second fastening members mounted to both side edge regions of the window glass so as to engage with the first fastening members for holding the shade members at the accumulated position.

According to further preferred embodiment of the present invention, the vent pipe extends from the cabin inside space to the trunk interior through a clearance between a backrest of the rear seat and the rear tray and projects out through a drain hole of the trunk to the cabin outside space, and an end portion of the vent pipe on the cabin inside space side is disposed upward of the cabin inside space.

According to further preferred embodiment of the present invention, the vent pipe projects out from the cabin inside space to the cabin outside space through a drain hole of a bottom plate of the cabin, and an end portion of the vent pipe on the cabin inside space side is disposed upward of the cabin inside space.

### Brief Explanation of the Drawings

Fig. 1 is a schematic side-sectional view of a car provided with the cabin ventilator for car according to a first embodiment of the present invention.
Fig. 2 is an enlarged side view of a solar battery panel part as illustrated in Fig. 1.
Fig. 3 is a schematic front view illustrating the neighborhood of a window glass seen from inside of a cabin of the car as illustrated in Fig. 1 with a shade being in an accumulated position.
Fig. 4 is a front view illustrating the neighborhood of the window glass seen from outside of the car as illustrated in Fig. 1 with the shade being in a working position.
Fig. 5 is a lateral sectional view illustrating the neighborhood of a portion of the shade mounted to the window glass and located in the working position.
Fig. 6 is a lateral sectional view illustrating the neighborhood of pull tabs of the shade in the working position.
Fig. 7 is a perspective view of a shade member in the accumulated position.
Fig. 8 is a perspective view of the shade member in the working position.
Fig. 9 is a perspective view of an intermediate fixing member.
Figs. 10A and 10B are a perspective view and a plan view illustrating a modified example of a supporting means for a solar battery panel body, respectively.
Figs. 11A and 11B are perspective views illustrating another embodiment of the solar battery panel part, Fig. 11A illustrates an embodiment with a lid in a closed position and Fig. 11B illustrates an embodiment with a lid in an open position.

### Best Mode for Carrying Out the Invention

Preferred embodiments of the present invention will now be explained with reference to the drawings.

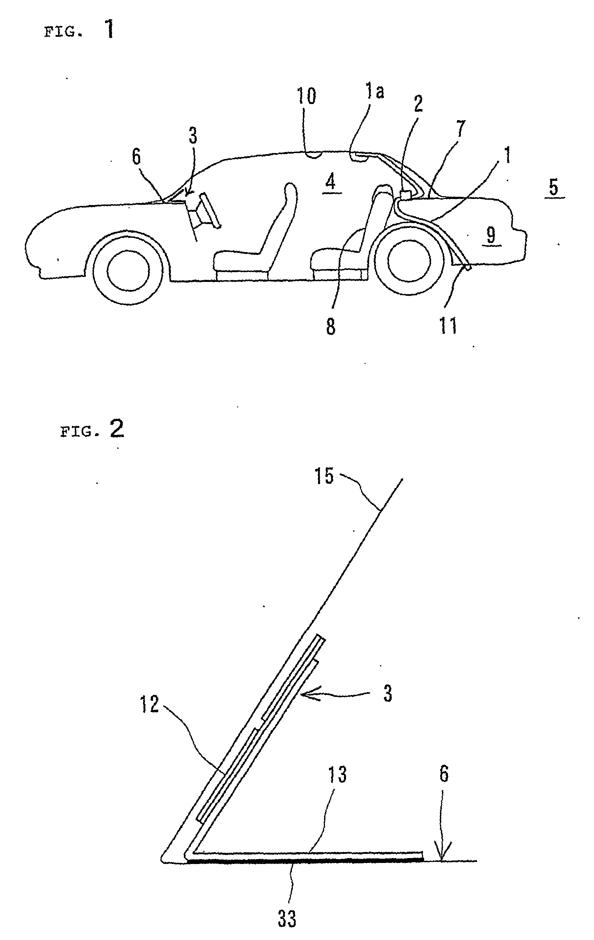

Fig. 1 is a schematic side-sectional view of a car provided with the cabin ventilator for car according to a first embodiment of the present invention. As illustrated in Fig. 1, the cabin ventilator for car according to the present invention comprises a flexible vent pipe 1 for communicating a cabin inside space 4 with a cabin outside space 5, a blower 2 connected to the vent pipe 1 for exhausting air from the cabin inside space 4 to the cabin outside space 5, and a solar battery panel part 3 disposed in the cabin inside space at a position where sunlight is radiated for supplying electric power to the blower 2. In this embodiment, the solar battery panel part 3 is disposed on a dashboard 6.

The vent pipe 1 extends from the cabin inside space 4 into a trunk space 9 through a clearance between a backrest 8 of a rear seat and a rear tray 7 in the cabin interior, and further projects outside through a drain hole 11 formed in a bottom of the trunk space 9. An end portion 1a of the vent pipe 1 located in the cabin inside space 4 is attached to a ceiling 10 (or upward of a rear pillar) in the cabin interior by means of suitable known attachment.

Since the vent pipe 1 has a radius of only 2 to 3 cm, it is extremely easy to pass the vent pipe 1 through the clearance between the backrest 8 of the rear seat and the rear tray 7 without additionally processing the backrest 8 of the rear seat or the rear tray 7, and accordingly to install the vent pipe 1 in the car.

While the blower 2 is disposed on the rear tray 7 in this embodiment, it is also possible to dispose the blower 2 into the trunk space 9. Further, while the blower 2 is disposed midway of the vent pipe 1 in this embodiment, it is alternatively possible to dispose the blower 2 at the end portion 1a of the vent pipe 1 in the cabin inside space 4 and to attach the same together with the end portion 1a of the vent pipe 1 to the ceiling 10 (or upward of the rear pillar) in the cabin interior.

The position at which the vent pipe is disposed is not limited to that of the present embodiment, and it is also possible to make the vent pipe project from the cabin inside space to the cabin outside space through a drain hole of a bottom plate of the car and to dispose the end portion of the vent pipe on the cabin inside space side upward of the cabin inside space.

Fig. 2 is an enlarged side view of the solar battery panel part as illustrated in Fig. 1. As illustrated in Fig. 2, the solar battery panel part 3 includes a solar battery panel body 12 and support member 13 which is secured to the rear surface of the solar battery panel body 12, each having a V-shaped section for supporting the solar battery panel body 12 on the dashboard 6 such that a sunlight receiving surface of the solar battery panel body 12 faces towards the cabin outside space. An outer surface of one bent piece of the supporting member 13 is fixed to the solar battery panel body 12 while an anti-slip sheet 33 is adhered to an outer surface of the other bent piece. The solar battery panel part 3 is disposed on the dashboard 6 in such a manner that the anti-slip sheet 33 contacts the surface of the dashboard 6. With this arrangement, it is possible to prevent the solar battery panel part 3 from moving due to oscillation or other factors during running of the car. Further, it is alternatively possible to fix the solar battery panel part 3 to the dashboard 6 by screwing the support member 13 to the dashboard 6.

Though not shown in the drawings, one end of a lead wire for supplying electric power generated by the respective solar batteries is connected to a rear surface of the solar battery panel body 12 while the other end thereof is connected to a power supply cable (not shown) of the blower 2 through a known suitable connector.

According to the present invention, electric power for driving the blower for ventilation can be sufficiently supplied even if the sunlight receiving surface of the solar battery panel body 12 is small in area, so that the solar battery panel part 3 of small size can be realized. For instance, the solar battery panel part 3 of this embodiment has a dimension of approximately 8cm (in longitudinal direction) by 30 cm (in horizontal direction). It is accordingly possible to dispose the solar battery panel part 3 in the bottom area of the window glass at the passenger's seat and thus to prevent blocking the driver's view.

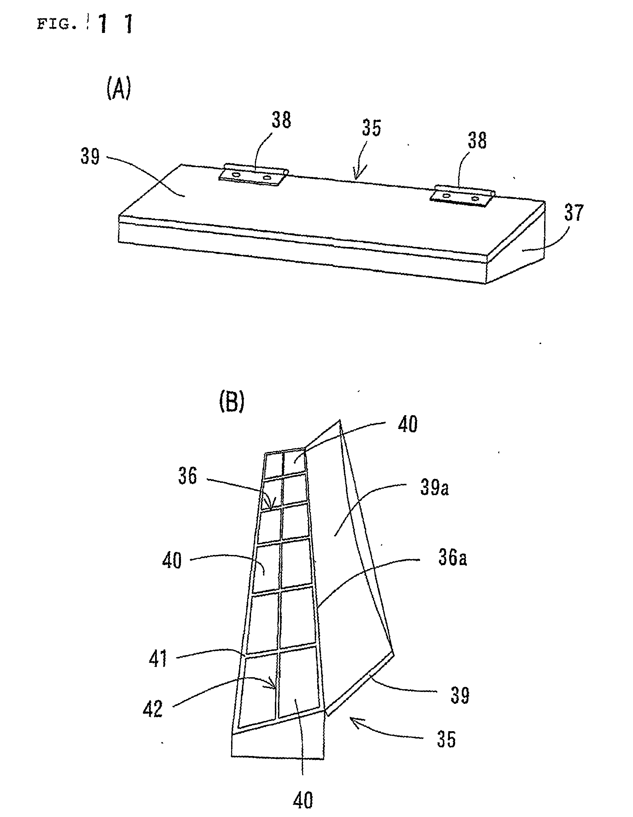

The means for supporting the solar battery panel body 12 is not limited to that of the present embodiment. Figs. 10A and 10B are a perspective view and a plan view illustrating a modified example of a supporting means for a solar battery panel body, respectively. In Figs. 10A and 10B, the supporting means includes a pair of L-shaped members l3'. An outer surface of one piece of each L-shaped member 13' is attached by adhesion to an end surface sideward of a solar battery panel body 12' and outer surface of the other piece is attached to an inside surface of the window glass 15 by means of a pressure sensitive adhesive double coated tape 32, whereby the solar battery panel part 3' is supported on and fixed to the inside surface of the window glass 15 with a sunlight receiving surface of the solar battery panel body 12' facing towards the cabin outside space.

It is alternatively possible to adhere a pressure sensitive adhesive double coated tape or to apply an adhesive agent to a suitable region on the surface (sunlight receiving surface) of the solar battery panel body 12 to fix the solar battery panel body 12 directly to the inside surface of the window glass 15 with the sunlight receiving surface facing towards the cabin outside space, or, to provide a known suitable supporting means at the solar battery panel body 12 so as to attach the solar battery panel body 12 to an inside window frame portion in such a manner that its sunlight receiving surface faces towards the cabin outside space.

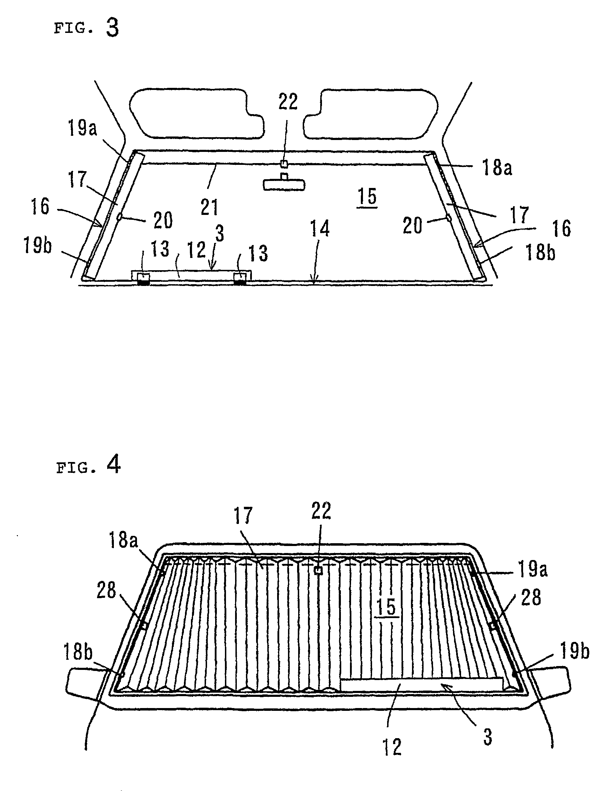

Fig. 3 is a schematic front view illustrating the neighborhood of the window glass seen from inside of the cabin of the car as illustrated in Fig. 1 with a shade being in an accumulated position. Fig. 4 is a front view illustrating the neighborhood of the window glass seen from outside of the cabin of the car as illustrated in Fig. 1 with the shade being in a working position.

As illustrated in Figs. 3 and 4, the cabin ventilator for car according to the present invention further comprises a shade provided at both side end portions of the window glass 15 so as to cover the window glass 15 together with the solar battery panel part 3 when the car is parked. In the present embodiment, the shade is arranged by partially changing the arrangement of the shade as recited in U.S. Patent No. 5,269,360.

As it is clear from Figs. 3 and 4, the shade comprises a pleated shade assembly 16 having a pair of side edges, a top edge, a bottom edge and an intermediate portion. The shade assembly 16 includes a pair of pleated shade members 17 each of which is movable between a working position where the pleated shade member is expanded to a center of the window glass 15 (see Fig. 4) and an accumulated position where the pleated shade member is folded towards side edges of the window glass 15 (see Fig. 3), two pairs of upper and lower L-shaped fixing members 18a, 18b; 19a, 19b, pull tabs 20, a rail wire 21 and an intermediate fixing member 22.

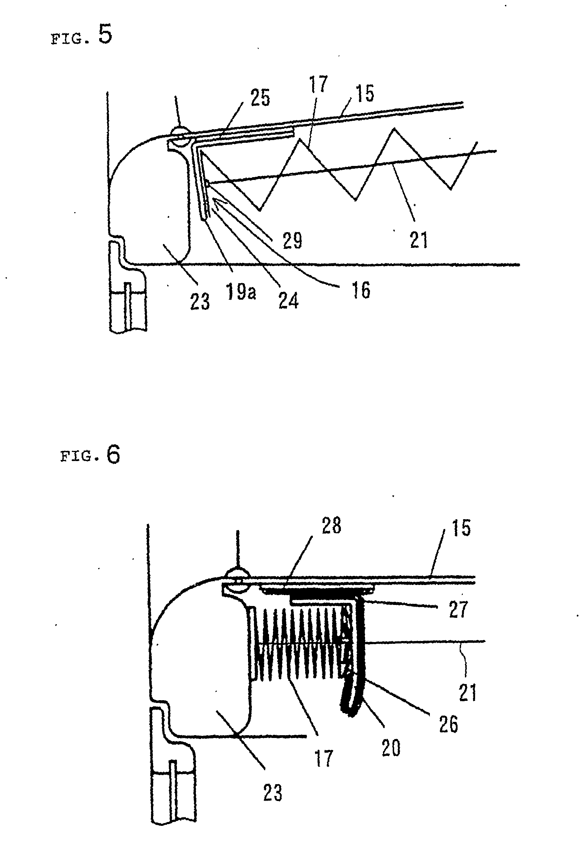

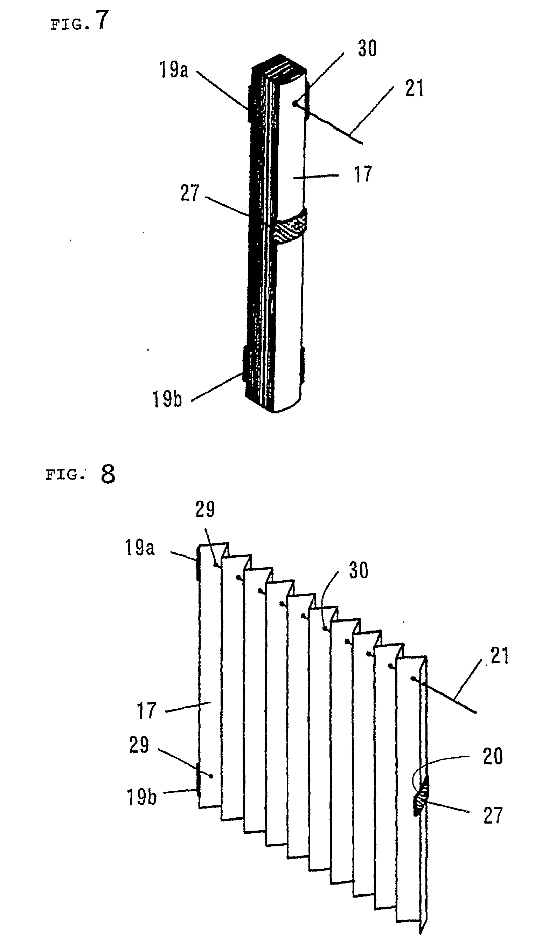

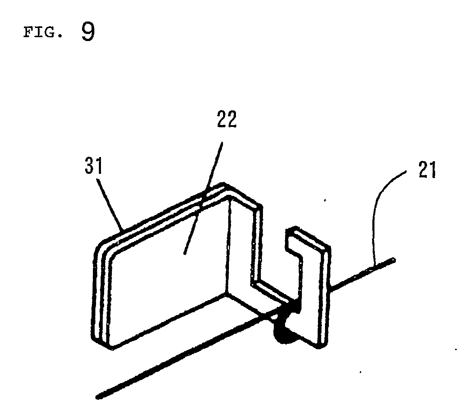

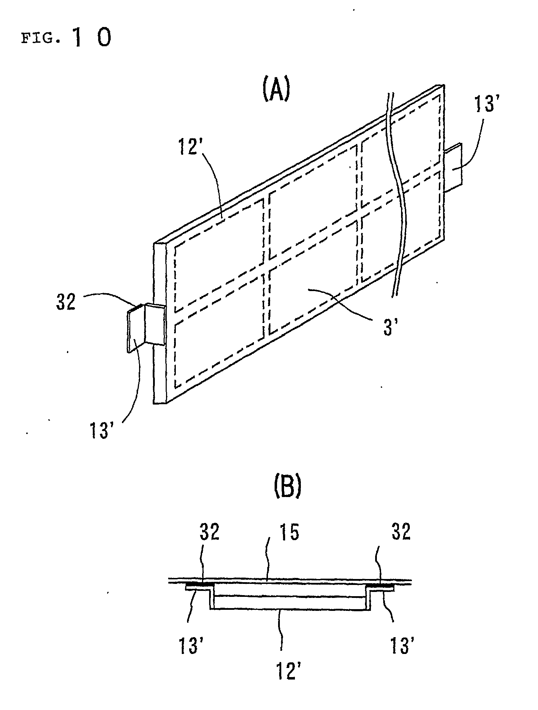

Fig. 5 is a lateral sectional view illustrating the neighborhood of a portion of the shade mounted to the window glass and located in the working position. Fig. 6 is a lateral sectional view illustrating the neighborhood of the pull tabs of the shade in the accumulated position. Fig. 7 is a perspective view of the shade members in the accumulated position. Fig. 8 is a perspective view of the shade members in the working position. Fig. 9 is a perspective view of the intermediate fixing member.

As illustrated in Figs. 3 to 5, two pairs of upper and lower L-shaped fixing members 18a, 18b; 19a, 19b are respectively fixed at both side end portions of the window glass 15 adjacent to side posts 23 of the car by means of pressure sensitive adhesive double coated tapes 25. Insidemost folding pieces 24 of the shade members 17 fixed to the respective pairs of upper and lower L-shaped fixing members 18a, 18b; 19a, 19b through hollow rivets 29. Through holes 30 are formed at upper end portions of the respective folding pieces of the shade members 17. As illustrated in Fig. 9, the intermediate fixing member 22 is of L-shaped form, wherein one piece thereof is fixed to a central portion of the top edge of the window glass 15 through a pressure sensitive adhesive double coated tape 31 (see Figs. 3 and 4) while the other piece is shaped in a hooked form in such a manner that the associated rail wire 21 may be wound thereat.

As it can be understood from Figs. 3, 5 and 8, the rail wire 21 is pieced through the rivets 29 and the through holes 30 of the shade member 17 wherein its one end is fixed at one upper L-shaped fixing member 19a while the other end extends while piercing through the shade member 17 on one end side thereof, is wound around the intermediate fixing member 22, and further extends while piercing through the shade member 17 on the other side thereof to be then fixed at the other upper L-shaped fixing member 18a.

As illustrated in Fig. 6, each outer surface portion 26 of the shade member 17 is provided with a pull tab 20 for expanding the shade member 17 while pulling. Each pull tab 20 is of L-shaped form and is provided with a first fastening member 27 on its outer surface. A second fastening member 28 that may be engaged with the first fastening member 27 in a separable manner respectively is attached to both end portions inside of the window glass 15.

Upon engagement of the first fastening member 27 with the second fastening member 28, the shade member 17 is held in the entirely folded condition in the accumulated position (see Fig. 7), and upon engagement of both first fastening members 27 of the pull tabs 20 when the shade members 17 on the right and left are expanded to the center of the window glass 15 for use, both shade members 17 may be held in the expanded condition in the working position (see Fig. 4).

In the present cabin ventilator for car, the shade members 17 are in the accumulated position and held in the folded condition on both sides of the window glass 15 during running of the car so that they will not block driver's view during driving. It should be noted that since electric power may be supplied through the solar battery panel part 3 upon receipt of sunlight incoming the interior of the car, it is possible to exhaust dirty air containing cigarette smoke and others to the exterior.

When the car is parked outdoors, the shade members 17 are held in the working position in which the shade members are expanded from the accumulated position up to the center of the window glass 15 so as to cover the window glass 15 together with the solar battery panel part 3 from the cabin interior. At this time, since the shade members 17 are allowed to rotate around the rail wire 21 as a whole, the solar battery panel part 3 may be favorably covered even if it is somewhat bulky, and they also match the shape of the dashboard in a favorable manner. In this manner, the solar battery panel part 3 may receive sunlight incoming through the window glass 15 to supply electric power to the blower in such a manner that air of the cabin interior is exhausted to the cabin exterior through the vent pipe while incoming of sunlight into the cabin interior, especially the dashboard, the seats and the steering wheel, is prevented through the shade so as to prevent these from becoming too hot.

While the solar battery panel part 3 and the shade 16 are disposed inside of the window glass of the car in the present embodiment, it is also possible to dispose these inside of the rear glass or the side glasses of the car.

The constitution of the shade is also not limited to that of the above embodiment. Thus a shade may be formed of a single pleated cardboard or the like and pinched between sunvisors and the inner surface of window glass when the car is parked.

The blower 2 is actuated by electric power generated by the solar battery panel body 3 whereby air in the cabin interior is exhausted to the cabin exterior through the vent pipe 1.

In this case, while heat within the cabin interior will rise and float upward of the cabin inside space 4, heat within the cabin interior may be effectively exhausted since the end portion 1a of the vent pipe 1 in the cabin inside space 4 is located upward of the cabin inside space 4. Outside air will be supplied into the interior through a ventilator that is preliminarily provided at the car by an amount of air that has been exhausted to the exterior. In this manner, ventilation of the cabin interior may be reliably and effectively performed so as to prevent the temperature in the cabin interior from becoming hot.

The cabin ventilator for car according to the present invention can be mounted in a remarkably easy manner without additionally processing equipments which have been equipped for the car, so that it is quite a suitable one for a user to employ it for mounting the same to a car afterward.

Figs. 11A and 11B are perspective views of another embodiment of the solar battery panel part, Fig. 11A illustrates an embodiment with a lid in a closed position and Fig. 11B illustrates an embodiment with a lid in an open position.

In this modified example, as shown in Fig. 11, a solar battery panel part 35 includes a base 37 having an inclined upper surface 26 and a flat plate-like lid 39 mounted to the higher edge 36a of the inclined upper surface 26 through hinges 38 in an one-way opening manner. A solar battery panel body 42 is mounted to the inclined upper surface 26. The solar battery panel body 42 is comprised of a base plate 41 onto which a plurality of solar batteries 40 are mounted.

Though not shown in the drawings, one end of a lead wire for supplying electric power generated by the respective solar batteries 40 is connected to a rear surface of the solar battery panel body 42 while the other end thereof extends outside of the solar battery panel part 35. The other end of the lead wire and an electric power supply cable (not shown) of the blower 2 are connected to each other through a known suitable connector of one-touch-style.

The lid 39 is movable between a closed position (Fig. 11A) at which the lid covers the solar battery panel body 42 and an open position (Fig. 11B) at which the lid is rotated by a desired angle from the closed position and held in that position so as to keep the solar battery panel body 42 exposed to sunlight. ON/OFF switching of the blower 2 may be affected by the opening and closing of the lid 39.

An inside surface 39a of the lid 39 is formed to reflect sunlight, and is preferably in the form of a concave surface so that the inside surface 39a of the lid 39 functions as a sunlight condensing plate for the solar battery panel 40 when the lid 39 is in the open position. It should be noted that the base 37 and the lid 39 of the solar battery panel part 35 are formed of stainless steel plates.

The solar battery panel part 35 is disposed on the dashboard or on the rear tray.

When the car is parked outdoors, the lid 39 of the solar battery panel part 35 is held in the open position. The angle of holding the lid 39 in the open position is adjusted depending on the angle or the intensity of sunlight incoming the cabin interior so that the solar battery panel body 42 receives incident of sunlight through the window glass while simultaneously receiving sunlight that has been condensed through the inside surface 39a of the lid 39. The solar battery panel body 42 is accordingly capable of generating electric power sufficient to drive the blower 2 even if the weather has become temporarily cloudy or the sunlight has weakened.

Effects similar to those of the embodiment according to Figs. 1 through 4 may be also achieved based on the above-mentioned modified example.

### Industrial Applicability

According to the present invention, it is possible to provide a cabin ventilator for car that may be additionally installed by a user in the car in a quite easy manner, that is capable of reliably and effectively exhausting heat generated in the cabin interior to the exterior during the outdoor parking of the car, and that is capable of shielding incident of sunlight into the cabin interior, especially the dashboard, the seats and the steering wheel, to prevent these from becoming too hot.

## Claims

1. A cabin ventilator for car, comprising:
a flexible vent pipe for communicating a cabin inside space with a cabin outside space;
a blower connected to the vent pipe so as to exhaust air from the cabin inside space to the cabin outside space;
a solar battery panel part disposed in the cabin inside space at a position where sunlight is radiated for supplying electric power to the blower; and
a shade installed on at least one of the inside surface of a window glass, an inside window frame portion and a dashboard so that the shade can cover the window glass together with the solar battery panel part from the inside of the cabin during the parking of the car.

2. The cabin ventilator for car as claimed in Claim 1, wherein the solar battery panel part comprises a solar battery panel body, and means for supporting the solar battery panel body on at least one of the inside surface of the window glass, the inside window frame portion and the dashboard in such a manner that a sunlight receiving surface of the solar battery panel body faces towards the cabin outside space.

3. The cabin ventilator for car as claimed in Claim 1, wherein the solar battery panel part comprises a base with an inclined upper surface, a flat plate-like lid mounted to the higher edge of the inclined surface through hinges, and a solar battery panel body mounted on the upper surface, and is disposed on the dashboard or on the rear tray, and
the lid is movable between a closed position at which the lid covers the solar battery panel body and an open position at which the lid is rotated by a desired angle from the closed position and held in that position so as to keep the solar battery panel body exposed to sunlight, and an inside surface of the lid is formed to reflect sunlight.

4. The cabin ventilator for car as claimed in Claim 2 or 3, wherein the shade comprises a pleated shade assembly having a pair of side edges, a top edge, a bottom edge and an intermediate portion,
the assembly including:
two pairs of upper and lower L-shaped fixing members for attaching the upper and bottom edges of each side edge to each side end portion of the window glass;
a rail wire extending along the top edge of the window glass, both ends of the rail wire being fixed to the corresponding upper L-shaped fixing members;
a pair of pleated shade members, each of the shade members including a stable side edge secured to the pair of upper and lower L-shaped fixing members and a movable side edge, each of the shade members being slidably supported on the rail wire in such a manner that the pleated shade member is movable between a working position where the pleated shade member is expanded up to a central portion of the window glass and an accumulated position where the pleated shade member is folded towards the side end portion of the window glass;
pull tabs supported at respective movable side edges of the shade members;
an intermediate fixing portion mounted to a central portion of the top edge of the window glass and connected to the rail wire for supporting the rail wire;
first fastening members supported at the respective pull tabs of the shade members so as to engage with each other for fixing the shade members at the working position; and
second fastening members mounted to both side edge regions of the window glass so as to engage with the first fastening members for holding the shade members at the accumulated position.

5. The cabin ventilator for car as claimed in any one of Claims 1 to 3, wherein the vent pipe extends from the cabin inside space to the trunk interior through a clearance between a backrest of the rear seat and the rear tray and projects out through a drain hole of the trunk to the cabin outside space, and an end portion of the vent pipe on the cabin inside space side is disposed upward of the cabin inside space.

6. The cabin ventilator for car as claimed in any one of Claims 1 to 3, wherein the vent pipe projects out from the cabin inside space to the cabin outside space through a drain hole of a bottom plate of the cabin, and an end portion of the vent pipe on the cabin inside space side is disposed upward of the cabin inside space.
